# EUROPEAN PATENT APPLICATION

(11) **EP 2 667 578 A1**
(43) Date of publication of application: **27.11.2013**
(21) Application number: 12180044.5
(22) Date of filing: 10.08.2012
(51) Int. Cl.: H04M 1/03

(54) **Receiving device**

(30) Priority: 24.05.2012 TW 101118582
(71) Applicant: Acer Incorporated, New Taipei City 221 (TW)
(72) Inventor: Chang, Jia-Ren, Taiwan, ROC New Taipei City 221, (TW)
(74) Representative: Chamberlain, Alan James

(57) **Abstract**

A receiving device including a casing, a receiver, and a sound guiding module is provided. The casing has a sound-out hole. The receiver is disposed within the casing, and a center of the receiver deviates from the sound-out hole. The sound guiding module is disposed between the receiver and the sound-out hole to form a sound guiding channel. In this receiving device, the sound emitted from the receiver is guided to the sound-out hole through the sound guiding channel, such that the bass loss and sensitivity reduction problems due to the deviation of the center of the receiver from the sound-out hole can be effectively reduced.

## Description

### BACKGROUND OF THE INVENTION

### 1. Field of the Invention

The present invention relates to a receiving device, and more particularly, to a receiving device in which a center of a receiver deviates from a sound-out hole.

### 2. Description of Related Art

With the increasing popularization of mobile phones, mobile phones have undoubtedly replaced traditional telephones to become a convenient and efficient communication tool. However, mobile phones with only basic functions have gradually been unable to meet the consumers' ever-increasing diverse needs. In order to meet the consumers' demands, manufactures have all been engaged in developing mobile phones with stronger function and lower profile.

The current mobile phones typically have a sound-out hole aligned with a receiver. Therefore, the sound emitted from the receiver can be directly transmitted to the sound-out hole. However, the mobile phones trend toward lightweight and low profile, causing internal components of the mobile phone to thickly crowd in a casing, such that the sound-out hole becomes unable to be aligned with the receiver. As such, like an unduly large acoustic impedance, this causes a severe bass loss and sensitivity reduction of the mobile phones.

### SUMMARY OF THE INVENTION

Accordingly, the present invention is directed to a receiving device in which the sound emitted from a receiver is guided to a sound-out hole by a sound guiding module to increase sound sensitivity and reduce bass loss.

The present invention provides a receiving device including a casing, a receiver, and a sound guiding module. The casing has a sound-out hole. The receiver is disposed within the casing, and a center of the receiver deviates from the sound-out hole. The sound guiding module is disposed between the receiver and the sound-out hole to form a sound guiding channel.

In one embodiment, the receiver includes a frame, and the sound guiding module includes a cushion connected to the frame of the receiver.

In one embodiment, the receiver further includes a diaphragm located within the frame, and the cushion includes a concave cavity corresponding to the diaphragm.

In one embodiment, the cushion further includes an opening in communication with the concave cavity.

In one embodiment, the diaphragm includes a dome, and a width of the opening is greater than or equal to a width of the dome.

In one embodiment, the sound guiding module further includes a sound guiding tube connected to the cushion and communicating between the opening of the cushion and the sound-out hole of the casing.

In one embodiment, the sound guiding tube is a bent tube or a straight tube.

In one embodiment, the cushion and the sound guide tube are integrally formed together.

In one embodiment, the material of the cushion is foam or plastic.

In one embodiment, a distance between a center of the receiver and a center of the sound-out hole is approximately half of a width of the receiver.

In view of the foregoing, in the present invention, with the sound guiding module disposed between the receiver and the sound-out hole to make the sound emitted from the receiver transmit along the sound guiding channel formed by the concave cavity and opening of the cushion and the sound guiding tube, and then leave the casing via the sound-out hole, the bass loss and sensitivity reduction problems of the receiving device due to the deviation of the center of the receiver from the sound-out hole can be effectively reduced.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

Fig. 1A is a cross-sectional view of a receiving device according to one embodiment of the present invention.

Fig. 1B is an exploded view of a receiver and a cushion of the receiving device of Fig. 1A.

Fig. 2 is a cross-sectional view of a receiving device according to another embodiment of the present invention.

Fig. 3 is an exploded view of a receiver and a cushion of a receiving device according to another embodiment of the present invention.

### DESCRIPTION OF THE EMBODIMENTS

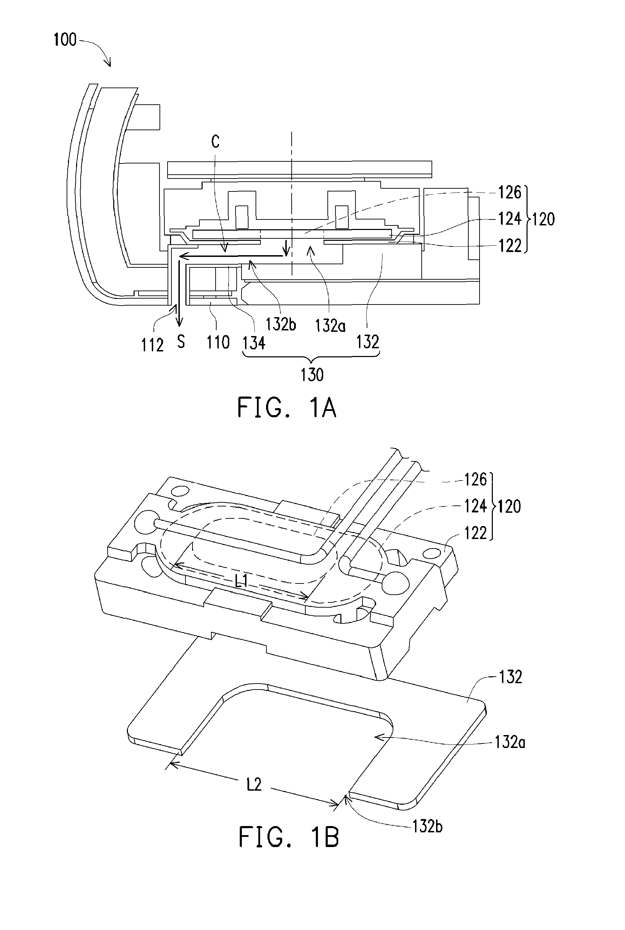

Fig. 1A is a cross-sectional view of a receiving device according to one embodiment of the present invention. Fig. 1B is an exploded view of a receiver and a cushion of the receiving device of Fig. 1A. Referring to Fig. 1A and Fig. 1B, the receiving device 100 of the present embodiment includes a casing 110, the receiver 120, and a sound guiding module 130. The casing 110 has a sound-out hole 112. The receiver 120 is disposed within the casing 110, and a center of the receiver 120 deviates from the sound-out hole 112. The sound guiding module 130 is disposed between the receiver 120 and the sound-out hole 112 to form a sound guiding channel C.

Referring to Fig. 1A, in the present embodiment, a distance between the center of the receiver 120 and the center of the sound-out hole 112 is half of a width of the receiver 120. However, this particular value of the distance between the center of the receiver 120 and the center of the sound-out hole 112 should not be regarded as limiting. In other embodiments, the distance between the center of the receiver 120 and the center of the sound-out hole 112 may be less or greater than half of the width of the receiver 120 (however, excluding the situation where the center of the receiver is aligned with the center of the sound-out hole). In the present embodiment, in order to avoid bass loss and sensitivity reduction due to the deviation of the center of the receiver 120 from the sound-out hole 112, in the receiving device 100 of the present embodiment, the sound guiding module 130 is arranged between the receiver 120 and the sound-out hole 112 to form the sound guiding channel C, such that the sound S emitted by the receiver 120 is guided to the sound-out hole 112 through the sound guiding channel C.

In the present embodiment, the receiver 120 includes a frame 122 and a diaphragm 124. The diaphragm 124 is disposed within the frame 122 and includes a dome 126 at a center of the diaphragm 124. The receiver 120 produces sound S through vibration of the dome 126 of the diaphragm 124.

The sound guiding module 130 includes the cushion 132 and a sound guiding tube 134. The cushion 132 of the sound guiding module 130 is connected to the frame 122 of the receiver 120. The cushion 132 and the frame 122 of the receiver 120 may be connected, for example, by adhesive, to ensure that the portions of the receiver 120 and the cushion 132 at the connection area are closely bonded. As such, the sound S can be prevented from dispersing from between the receiver 120 and the cushion 132.

As shown in Fig. 1B, the cushion 132 of the present embodiment is U-shaped and includes a concave cavity 132a and an opening 132b in communication with the concave cavity 132a. The concave cavity 132a corresponds to the dome 126 of the diaphragm 124. Because the sound-out hole 112 is greatly deviated from the receiver 120, in order to allow the sound S emitted by the receiver 120 to be completely transmitted to the sound-out hole 112, the cushion 132 forms the concave cavity 132a at a location corresponding to the dome 126 of the diaphragm 124, such that the sound S emitted by the dome 126 can be guided to the concave cavity 132a along an inner contour of the cushion 132. The material of the cushion 132 may be foam or plastic. However, the cushion 132 may be made from another material or of another shape as long as the cushion 132 is able to be fixed to the receiver 120 to guide the sound S.

In addition, as shown in Fig. 1B, in the present embodiment, a width L2 of the opening 132b of the cushion 132 is greater than a width L1 of the dome 126, so as to prevent a reduction of decibel of the sound S emitted by the dome 126 due to being blocked by the cushion 132.

In addition, the sound guiding tube 134 of the sound guiding module 130 is connected to the cushion 132, communicating between the opening 132b of the cushion 132 and the sound-out hole 112 of the casing 110. As shown in Fig. 1A, because the sound-out hole 112 is greatly deviated from the receiver 120, the sound guiding tube 134 of the present embodiment is designed as a bent tube which cooperates with internal structures within the casing 110 to form part of the sound guiding channel C between the receiver 120 and the sound-out hole 112 so as to guide the sound S from the opening 132b of the cushion 132 to the sound-out hole 112. The material of the sound guiding tube 134 may be acrylonitrile-butadiene-styrene (ABS) or Polycarbonate (PC), but these exemplary materials should not be regarded as limiting. In other embodiments, the cushion 132 and the sound guiding tube 134 may also be integrally formed together.

In order to prevent the sound waves emitted from receiver 120 toward the sound-out hole 112 from interfering with each other to form a dipole which cancels each other out, the receiver 120 needs to be well sealed around its periphery to make the receiver 120 a monopole. The other side of the receiver 120 away from the sound-out hole 112 may not be sealed, and the sound may directly radiate into an internal space of the casing 110. Taking a mobile phone or a tablet in which the receiving device 100 is disposed as an example, because an internal space of the mobile phone/tablet is far greater than an equivalent volume of the receiver 120, the bass response is not affected even if there is a gap in the other side of the receiver 120 away from the sound-out hole 112.

The receiving device 100 of the present embodiment may be applied in devices such as mobile phones or tablets to solve the problem of bass loss and sensitivity reduction due to the deviation of the receiver 120 from the sound-out hole 112. With the sound guiding module 130 disposed between the receiver 120 and the sound guiding hole 112 to make the sound S emitted from the receiver transmit along the sound guiding channel formed by the concave cavity 132a and opening 132b of the cushion 132 and the sound guiding tube 134, and then leave via the sound-out hole 112, the receiving device 100 of the present embodiment achieves good wideband sound result and sound sensitivity.

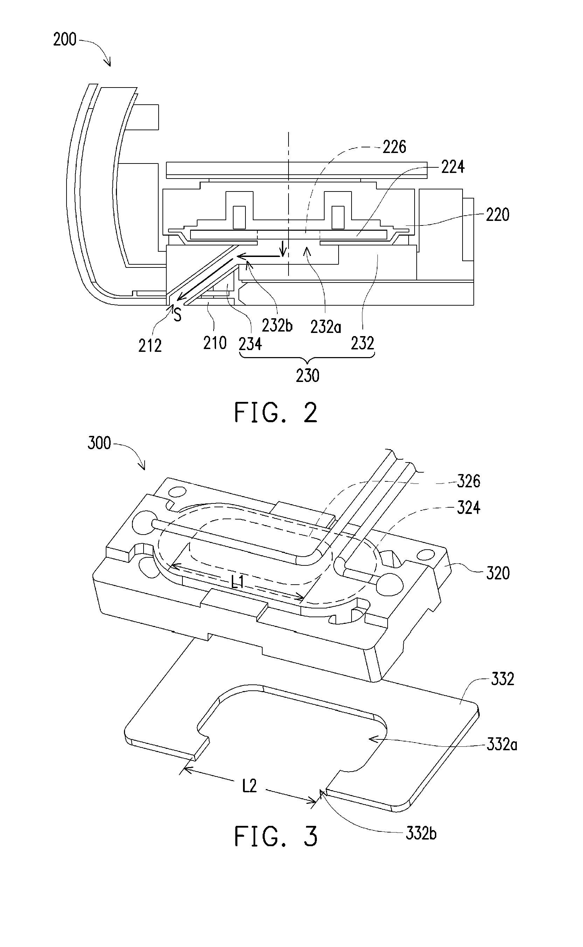

Fig. 2 is a cross-sectional view of a receiving device according to another embodiment of the present invention. Referring to Fig. 2, the receiving device 200 of Fig. 2 and the receiving device 100 of Fig. 1A are different in that the sound guiding tube 234 of the receiving device 200 of Fig. 2 is a straight tube. In order to shorten the transmitting path of the sound S to reduce sound absorption during the transmitting course, in the present embodiment, the sound guiding tube 234 is tiltingly disposed between the opening 232b of the cushion 232 and the sound-out hole 212 of the casing 210. The sound S produced by vibration of the dome 226 of the diaphragm 224 of the receiver 220 is transmitted through the concave cavity 232a and opening 232b of the cushion 232 and guided to the sound-out hole 212 along a shortened path.

It is noted, however, that the sound guiding tube 234 may be of another shape as long as the sound guiding tube 234 is able to be closely connected to the cushion and communicate between the opening 232b and the sound-out hole 212. In the present embodiment, the sound guiding module 230 enables the receiving device 200 in which the center of the receiver 220 deviates from the sound-out hole 212 to achieve good wideband sound result and sound sensitivity.

Fig. 3 is an exploded view of a receiver and a cushion of a receiving device according to another embodiment of the present invention. Referring to Fig. 3, the cushion 332 of Fig. 3 and the cushion 232 of Fig. 1B are different in that the cushion 332 of Fig. 3 and the cushion 232 of Fig. 1B have different shape, and, different from the cushion 132 of Fig. 1B in which the width L2 of the opening 132 of Fig. 1B is greater than the width L1 of the dome 126, the width L2 of the opening 332b of the cushion 332 of Fig. 3 is just equal to the width L1 of the dome 326.

Although the shape of the cushions 232, 332 and the width of the openings 232b, 332b are different, the sound emitted from the dome 326 of the receiver 320 is not blocked by the cushion 332 when leaving the cushion 332 via the opening 332b because the width of the opening 332b of the cushion 332 of Fig. 3 is equal to the width of the dome 326. Therefore, using the cushion 332 of the present embodiment does not affect the decibel of the sound emitted from the receiver 320, too. It is noted, however, that the shape of the cushion 332 and the width of the opening 332b should not be limited to the particulars discussed above.

In summary, in the present invention, with the sound guiding module disposed between the receiver and the sound-out hole to make the sound emitted from the receiver transmit along the sound guiding channel formed by the concave cavity and opening of the cushion and the sound guiding tube, and then leave the casing via the sound-out hole, the bass loss and sensitivity reduction problems due to the deviation of the center of the receiver from the sound-out hole can be effectively reduced.

## Claims

1. A receiving device (100, 200), comprising:
a casing (110, 210), having a sound-out hole (112, 212);
a receiver (120, 220, 320), disposed within the casing (110, 210), a center of the receiver (120, 220, 320) deviating from the sound-out hole (112, 212); and
a sound guiding module (130, 230), disposed between the receiver (120, 220, 320) and
the sound-out hole (112, 212) to form a sound guiding channel (C).

2. The receiving device (100) according to claim 1, wherein the receiver (120) comprises a frame (122), and the sound guiding module (130) comprises a cushion (132) connected to the frame (122) of the receiver (120).

3. The receiving device (100) according to claim 2, wherein the receiver (120) further comprises a diaphragm (124) located within the frame (122), and the cushion (132) comprises a concave cavity (132a) corresponding to the diaphragm (124).

4. The receiving device (100) according to claim 3, wherein the cushion (132) further comprises an opening (132b) in communication with the concave cavity (132a).

5. The receiving device (100) according to claim 4, wherein the diaphragm (124) comprises a dome (126), and a width of the opening (132b) is greater than or equal to a width of the dome (126).

6. The receiving device (100) according to claim 4, wherein the sound guiding module (130) further comprises a sound guiding tube (134) connected to the cushion (132) and communicating between the opening (132b) of the cushion (132) and the sound-out hole (112) of the casing (110).

7. The receiving device (100) according to claim 6, wherein the sound guiding tube (134) is a bent tube or a straight tube.

8. The receiving device (100) according to claim 6, wherein the cushion (132) and the sound guide tube (134) are integrally formed together.

9. The receiving device (100) according to claim 2, wherein the material of the cushion (132) is foam or plastic.

10. The receiving device (100, 200) according to claim 1, wherein a distance between a center of the receiver (120, 220) and a center of the sound-out hole (112, 212) is approximately half of a width of the receiver (120, 220).

11. The receiving device (100, 200) according to claim 1, wherein the receiving device (100, 200) is disposed in a mobile phone or a tablet.
